# EUROPEAN PATENT APPLICATION

(11) **EP 2 827 300 A1**
(43) Date of publication of application: **21.01.2015**
(21) Application number: 12871056.3
(22) Date of filing: 16.11.2012
(51) Int. Cl.: G06T 11/80, G06T 3/00

(54) **AREA DESIGNATING METHOD AND AREA DESIGNATING DEVICE**

(30) Priority: 14.03.2012 JP 2012057058
(71) Applicant: Omron Corporation, Kyoto-shi, Kyoto 600-8530 (JP)
(72) Inventor: MINATO Yoshihisa, Kyoto-shi Kyoto 600-8530 (JP); YANAGAWA Yukiko, Kyoto-shi Kyoto 600-8530 (JP)
(74) Representative: Kilian Kilian & Partner
(86) International application number: PCT/JP2012/079839
(87) International publication number: WO 2013/136592

(57) **Abstract**

The present invention provides a user interface that overlays a plurality of subareas as candidates on a target image to be presented, and allows a user to select a desired subarea from the subareas. The subareas are formed by segmenting the target image with a predetermined pattern (pattern segmentation) or by grouping pixels based on a feature such as color/brightness/edge (over segmentation). The size of the subarea may be changeable by the user, and the number of subareas to be overlaid on the target image to be displayed may be limited.

## Description

### Technical Field

The present invention relates to a technique for supporting a user operation of designating a partial area in an image.

### Background Art

A method called area segmentation (segmentation) has been known, in which a computer performs digital image processing to divide an image into a portion to be extracted (referred to as foreground) and other portions (referred to as background). In some cases, in the area segmentation, a method is employed, in which a user is allowed to designate an area to be the foreground or the background and a part of pixels as an initial value, so that higher dividing accuracy is achieved and segmentation is performed as the user intended. For a user interface for designating an area and a pixel on an image, a method of designating a rectangular area by mouse dragging and the like, a method of selecting a pixel by mouse clicking and the like, or a method of designating a contour of a pixel group or an area by mouse stroke performed like drawing a free curve with drawing software, is generally employed. Any pixel group on the image can be designated as the foreground or the background through such a method.

However, the conventional user interface is suitable for roughly designating an area and a pixel group of any shape, but is likely to cause erroneous designation of selecting an unintended pixel as well. Thus, there are disadvantages that, to accurately designate a narrow and small area and an area with a complex shape, high skill and a careful operation are required, and thus a long time is required for designating such an area. Depending on the use and an installed environment of a system, the area designation might be difficult due to an insufficient function or sensitivity of an input device for performing the area designation, and restricted user operation. For example, when the area designation described above is performed in an image inspection system operating in a manufacturing site, only a keypad and a controller might be provided as the input device, or an input operation might have to be performed with dirty fingers or with a glove on. Under such a condition, it is difficult to designate an area as intended.

### Citation List

### Non Patent Literature

NPL 1: Interactive image segmentation by maximal similarity based region merging, Jifeng Ning, Lei Zhang, David Zhan, Chengke Wu. Pattern Recognition 43 (2010) 445 to 456

### Summary of Invention

### Technical Problem

The present invention is made in view of the above circumstance, and an object of the present invention is to provide a technique of enabling an operation of designating an area in an image to be performed, easily and as intended.

### Solution to Problem

To achieve the object, the present invention employs a user interface, in which subareas as candidates are overlaid on a target image to be presented and allows a user to select a desired subarea from the subareas.

Specifically, the present invention is an area designating method of allowing, when area segmentation processing of dividing a target image into a foreground and a background is performed, a user to designate an area, as a part of the target image, as an area to be the foreground or the background. The method includes: a subarea setting step, in which a computer sets at least one subarea larger than a pixel, in the target image; a display step, in which the computer displays a designating image, on which a boundary of the subarea is drawn on the target image, on a display device; and a designating step, in which the computer allows the user to select the area to be the foreground or the background, from the at least one subarea on the designating image, by using an input device.

With this configuration, the subareas as candidates are recommended by the computer, and the user only needs to select an area satisfying a desired condition, from the candidates. Thus, the area can be intuitively and easily designated. The boundaries of the subareas are clearly shown, and the area is designated in a unit of a subarea. Thus, the designation of the user is more restricted, compared with a conventional method of allowing the user to freely input any area or pixel group with a mouse or the like. The restriction can prevent erroneous designation of selecting an unintended pixel as well, and thus facilitate the intended area designation.

The subarea setting step preferably includes a segmentation step of segmenting the target image into a predetermined pattern to form a plurality of the subareas (the segmentation method is referred to as "pattern segmentation"). Because the predetermined pattern is used, simple processing can be achieved and the subareas can be promptly set. Any pattern can be used for the segmentation. For example, when a lattice (grid) shaped pattern is used, the subareas are regularly arranged, and thus a subarea can be easily selected. Here, preferably, the subarea setting step further includes an extraction step of extracting a part of the subareas from the plurality of subareas formed in the segmentation step. Preferably, in the display step, only the subarea extracted in the extraction step is drawn in the designating image. By reducing the number of candidates (that is, options) drawn in the designating image, decision on which candidate is to be selected and a selection operation can be simplified. In the extraction step, for example, the subarea with a uniform color or brightness or the subarea without an edge is preferably extracted with a higher priority. This is because the subarea at a position over both the foreground and the background can be more likely to be excluded through such processing. Furthermore, it is also preferable that in the extraction step, the subareas to be extracted be selected in such a manner that a feature of a color or brightness, or a position in the target image varies among the extracted subareas as much as possible. By thus setting the group of candidate subareas, the subareas can be sufficiently set to each of a foreground portion and a background portion as intended by the user.

Furthermore, it is also preferable that the subarea setting step include a segmentation step of forming a plurality of the subareas by grouping the pixels based on a feature of at least one of a color, brightness, and an edge. Thus, the subareas with shapes corresponding to the shape, the pattern, the shading, and the like of an object in the target image, are formed. For example, each subarea is formed of a pixel group with a similar feature of the color or the brightness, or a pixel group defined by the edge. Thus, the subarea is less likely to include the pixels of both the foreground and the background. Accordingly, when the subarea thus formed is used as the candidate, even a narrow and small area and an area with a complex shape can be selected easily and as intended. In this method also, it is preferable that the subarea setting step further includes the extraction step of extracting a part of the subareas from the plurality of subareas formed in the segmentation step. Preferably, in the display step, only the subarea extracted in the extraction step is drawn in the designating image. This is because, by reducing the number of candidates (that is, options) drawn in the designating image, decision on which candidate to be selected and a selection operation can be simplified. For example, in the extraction step, the subarea without the edge, the subarea with a large size or width, or the subarea with a high contrast at a boundary portion may be extracted with a higher priority. By selecting the subarea without the edge and the subarea with a high contrast at a boundary portion with a higher priority, the subarea including the pixels in both the foreground and the background can be excluded. By the selecting the subarea with a large size or width with a higher priority, the subarea that is difficult to select due to its small size can be excluded. In the extraction step, it is also preferable that the subareas to be extracted be selected in such a manner that a feature of a color or brightness, or a position in the target image varies among the extracted subareas as much as possible. By thus setting a group of candidate subareas, subareas can be sufficiently set to various positions, and to the foreground portion and the background portion in the target image.

Preferably, the subarea selected by the user as the area to be the foreground or the background in the designating step is highlighted. Thus, the subarea selected to be the foreground or the background can be easily distinguished from the other subareas. Thus, the erroneous selection of the subarea can be prevented, and the usability can be improved.

Preferably, a size of the subarea with respect to the target image is changeable by the user. This is because the area designation is facilitated by appropriately adjusting the size of the subarea in accordance with the size, the shape, and the like of the foreground portion and the background portion in the target image.

It is also preferable that the method further include an image update step, in which the computer updates the designating image displayed on a screen of the display device, in accordance with an instruction from the user to enlarge, downsize, translate or rotate the image. It is also preferable that, in the image update step, the subarea be enlarged, downsized, translated, or rotated together with the target image. For example, by enlarging the display, pixels in the image, on which the subarea and the contour thereof are overlaid, can be checked in detail. Thus, even a narrow and small area and a portion with a complex shape can be accurately selected easily.

When the subareas are set by the pattern segmentation, it is also preferable that, in the image update step, only the target image be enlarged, downsized, translated, or rotated, without changing the position and the size of the subareas on the screen. For example, when the subarea is disposed over both the foreground and the background in the initial display screen, the display can be changed in such a manner that the subarea is positioned in the foreground or the background by enlarging, translating, rotating, or performing the like processing on the target image. Thus, accurate designation of only the foreground or the background can be facilitated.

It is also preferable that the input device include a movement key and a selection key, and the designating step includes: a step of putting any one of the subareas on the designating image in a selected state; a step of sequentially changing the subarea to be in the selected state, every time an input by the movement key is received from the user; and a step of selecting the subarea currently in the selected state as the foreground or the background when an input by the selection key is received from the user. With such a user interface, the intended subarea can be selected without fail with simple operation on the movement key and the selection key. Here, the subarea currently in the selected state is preferably highlighted. Thus, the subarea in the selected state can be easily distinguished from the other subareas. Thus, the erroneous selection of the subarea can be prevented, and the usability can be improved.

Furthermore, it is also preferable that the input device be a touch panel disposed on the screen of the display device, and in the designating step, the user touch the subarea on the designating image displayed on the screen of the display device, so that the area to be the foreground or the background is selected. With such a user interface, the intended subarea can be selected more intuitively.

The present invention can be regarded as an area designating method including at least one of the processes described above, or an area segmentation method of executing the area segmentation on the target image based on an area designated by the area designating method. Also, the present invention may be regarded as a program for causing a computer to execute the steps in the methods, or as a storage medium storing the program. Furthermore, the present invention may be regarded as an area designating device or an area segmentation device including at least one of means that perform the processes described above.

### Advantageous Effects of Invention

The present invention can provide a user interface that enables an operation of designating an area in an image to be performed, easily and as intended.

### Brief Description of Drawings

[Fig. 1] Fig. 1 is a diagram schematically showing the configuration of an image inspection apparatus.
[Fig. 2] Fig. 2 is a flowchart showing a flow of inspection processing.
[Fig. 3] Fig. 3 is a diagram for explaining a process of extracting an inspection area in the inspection processing.
[Fig. 4] Fig. 4 is a flowchart showing a flow of processing of setting the inspection area by using a setting tool 103.
[Fig. 5] Fig. 5 is a flowchart showing processing in Step S43 in Fig. 4 in detail.
[Fig. 6] Fig. 6(a) is a diagram showing an example where a captured image is displayed on an inspection area setting screen. Fig. 6(b) is a diagram showing an example of an inspection area extracted by area segmentation processing.
[Fig. 7] Fig. 7 is a diagram for explaining a designating image obtained by pattern segmentation of a first embodiment.
[Fig. 8] Fig. 8 is a diagram for explaining a designating image obtained by over segmentation of a second embodiment.
[Fig. 9] Fig. 9 is a diagram for explaining an example of a method of extracting a subarea in a third embodiment.
[Fig. 10] Fig. 10 is a diagram for explaining a designating image of a third embodiment.
[Fig. 11] Fig. 11 is a diagram for explaining an area designation operation in a designating image of a fourth embodiment.
[Fig. 12] Fig. 12 is a diagram for explaining an area designation operation in a designating image of a fifth embodiment.
[Fig. 13] Fig. 13 is a diagram for explaining an area designation operation in a designating image of a sixth embodiment.

### Description of Embodiments

The present invention relates to an area designating method of allowing, when processing called an area segmentation (segmentation) of dividing a target image into a foreground and a background is performed, a user to designate an area to be the foreground or an area to be the background, in the target image, as an initial value. For example, the area designating method and an area segmentation method according to the present invention can be applied to various fields, such as processing of extracting an area of an inspection target object in an original image in image inspection, processing of trimming only a foreground portion from the original image when background composition is performed in image editing, and processing of extracting only a diagnosed organ or portion, from a medical image. In the embodiments described below, an example where an area designating method according to the present invention is implemented in an inspection area setting function (setting tool) in an image inspection apparatus, is described as one application example.

### <First Embodiment>

### (Image Inspection Apparatus)

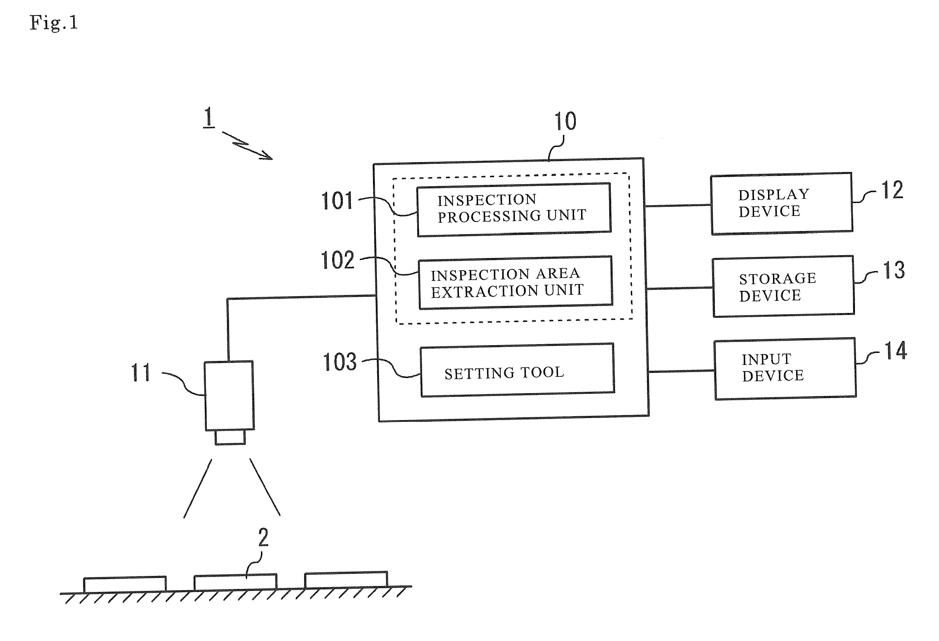

Fig. 1 schematically shows the configuration of an image inspection apparatus. An image inspection apparatus 1 is a system that performs appearance inspection on an inspection target object 2 conveyed on a conveyance path.

As shown in Fig. 1, the image inspection apparatus 1 includes hardware such as an apparatus main body 10, an image sensor 11, a display device 12, a storage device 13, and an input device 14. The image sensor 11 is a device for capturing a color or monochrome still or moving image into the apparatus main body 10. For example, a digital camera can be suitably used as the image sensor 11. When a special image (X ray image, thermo image, and the like) other than optical images is used for the inspection, a sensor suitable for such an image may be used. The display device 12 is a device for displaying an image captured by the image sensor 11, an inspection result, and a GUI screen related to inspection processing and setting processing. For example, a liquid crystal display can be used as the display device 12. The storage device 13 is a device that stores various types of setting information (inspection area definition information and an inspection logic) to which the image inspection apparatus 1 refers in the inspection processing and the inspection result. For example, an HDD, an SSD, a flash memory, and a network storage may be used as the storage device 13. The input device 14 is a device operated by a user to input an instruction to the apparatus main body 10. For example, a mouse, a keyboard, a touch panel, and a dedicated console can be used as the input device 14.

The apparatus main body 10 may be formed of a computer including, as hardware, a CPU (central processing unit), a main storage device (RAM), and an auxiliary storage device (ROM, HDD, SSD, or the like). The apparatus main body 10 includes, as functions, an inspection processing unit 101, an inspection area extraction unit 102, and a setting tool 103. The inspection processing unit 101 and the inspection area extraction unit 102 are functions related to the inspection processing, and the setting tool 103 is a function for supporting a work performed by the user to set the setting information required for the inspection processing. The functions are implemented when a computer program stored in the auxiliary storage device or the storage device 13 is loaded onto the main storage device, and executed by the CPU. Fig. 1 shows merely an example of the apparatus configuration. All or a part of the image sensor 11, the display device 12, the storage device 13, and the input device 14 may be integrated with the apparatus main body 10. The apparatus main body 10 may be formed of a computer such as a personal computer or a slate terminal, or may be formed of a dedicated chip, an onboard computer or the like.

### (Inspection Processing)

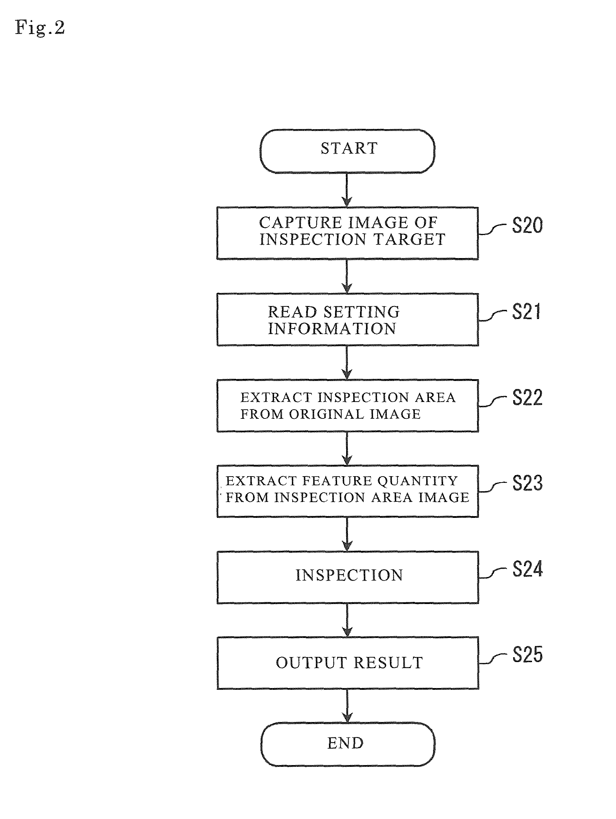

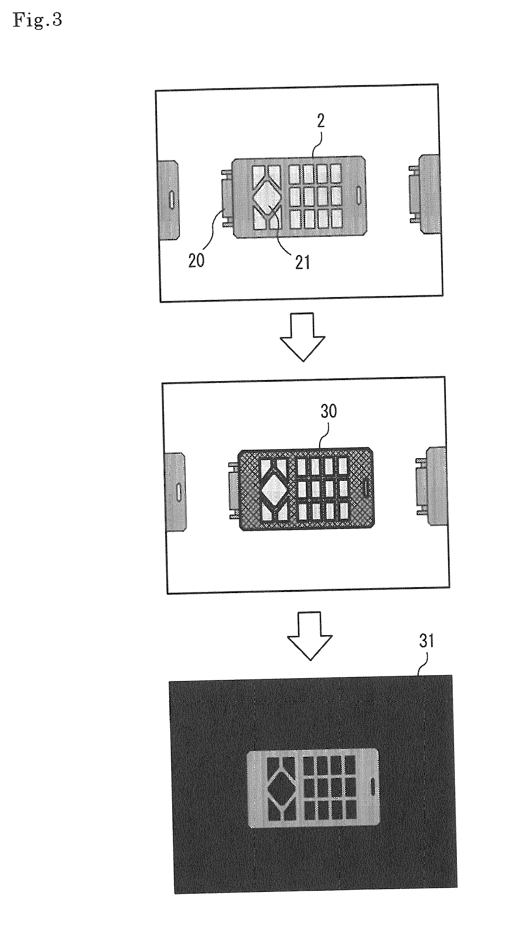

Operations related to the inspection processing performed by the image inspection apparatus 1 will be described by referring to Figs. 2 and 3. Fig. 2 is a flowchart showing a flow of the inspection processing. Fig. 3 is a diagram for explaining a process of extracting an inspection area in the inspection processing. Here, for convenience of explanation, the flow of the inspection processing is described with an inspection on a panel surface of a casing member of a cellphone (for detecting scratches and color unevenness) as an example.

In Step S20, an image of an inspection target object 2 is captured by the image sensor 11, and the image data is captured into the apparatus main body 10. Here, the captured image (original image) is displayed on the display device 12 as appropriate. The upper section in Fig. 3 shows an example of the original image. A casing member 2 as the inspection target appears in the center of the original image. Adjacent casing members partially appear on the left and the right sides of the inspection target on the conveyance path.

In Step S21, the inspection area extraction unit 102 reads the required setting information from the storage device 13. The setting information at least includes the inspection area definition information and the inspection logic. The inspection area definition information is information defining the position/shape of the inspection area to be extracted from the original image. The inspection area definition information may be of any format. For example, a bitmask with different labels respectively on the inner and outer sides of the inspection area, and vector data expressing the contour of the inspection area with a Bezier curve or a spline curve may be used as the inspection area definition information. The inspection logic is information defining the detail of the inspection processing. For example, the inspection logic includes a type and a determination method for a feature quantity used for inspection, as well as a parameter and a threshold used for extracting the feature quantity and determination processing.

In Step S22, the inspection area extraction unit 102 extracts a portion as the inspection area from the original image, in accordance with the inspection area definition information. The middle section in Fig. 3 shows a state where the inspection area (illustrated in cross hatching) 30 defined by the inspection area definition information, is overlaid on the original image. It can be seen that an inspection area 30 is exactly overlaid on the panel surface of the casing member 2. The lower section in Fig. 3 shows a state where an image (inspection area image 31) of a portion of the inspection area 30 is extracted from the original image. In the inspection area image 31, the conveyance path and adjacent members that had been around the casing member 2 are deleted. A hinge portion 20 and a button portion 21, to be excluded from the target portion of the surface inspection, are also deleted. The inspection area image 31 thus obtained is transmitted to the inspection processing unit 101.

In Step S23, the inspection processing unit 101 extracts a required feature quantity from the inspection area image 31, in accordance with the inspection logic. In this example, the colors of the pixels of the inspection area image 31 and the average value thereof are extracted, as the feature quantities for the inspection for the scratch/the color unevenness of the surface.

In Step S24, the inspection processing unit 101 determines whether there is a scratch/color unevenness, in accordance with the inspection logic. For example, when a pixel group with a color difference from the average value obtained in Step S23 exceeding a threshold is detected, the pixel group may be determined as the scratch or the color unevenness.

In Step S25, the inspection processing unit 101 displays the inspection result on the display device 12, and stores the inspection result in the storage device 13. Thus, the inspection processing on a single inspection target object 2 is completed. In the production line, processing in Steps S20 to S25 in Fig. 2 is repeated in synchronization with the timing at which the inspection target object 2 is conveyed to an angle of view of the image sensor 11.

In the appearance inspection, preferably, only pixels to be the inspection target are accurately extracted as the inspection area image 31. This is because, when the inspection area image 31 includes a background and an unnecessary portion (the hinge portion 20 and the button portion 21 in the example of Fig. 3), the pixels thereof become noise that might degrade the inspection accuracy. On the other hand, when the inspection area image 31 is smaller than the range to be the target of the inspection, incomplete inspection might occur. Thus, in the image inspection apparatus 1 of this embodiment, the setting tool 103 for easily creating the inspection area definition information for extracting the inspection area image accurately, is prepared.

### (Setting Processing of Inspection Area)

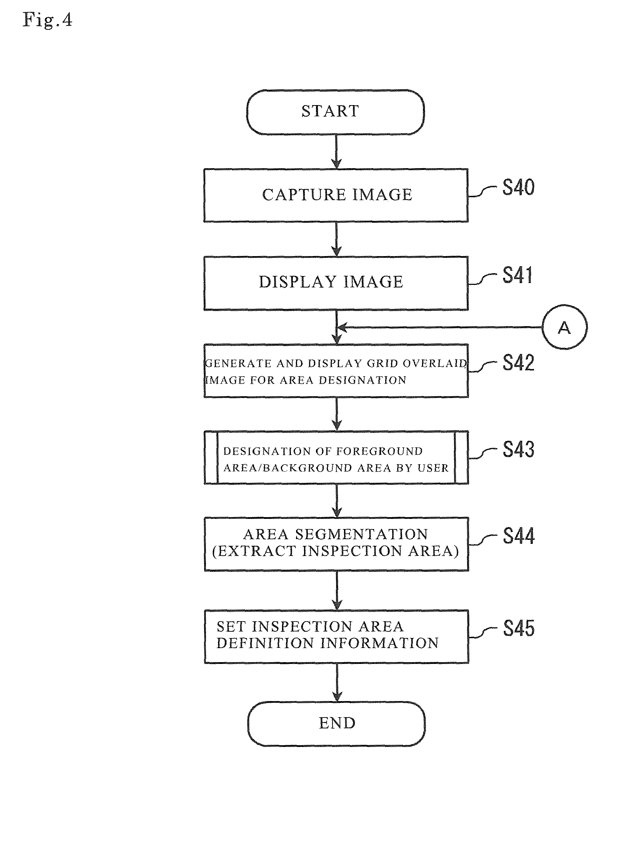

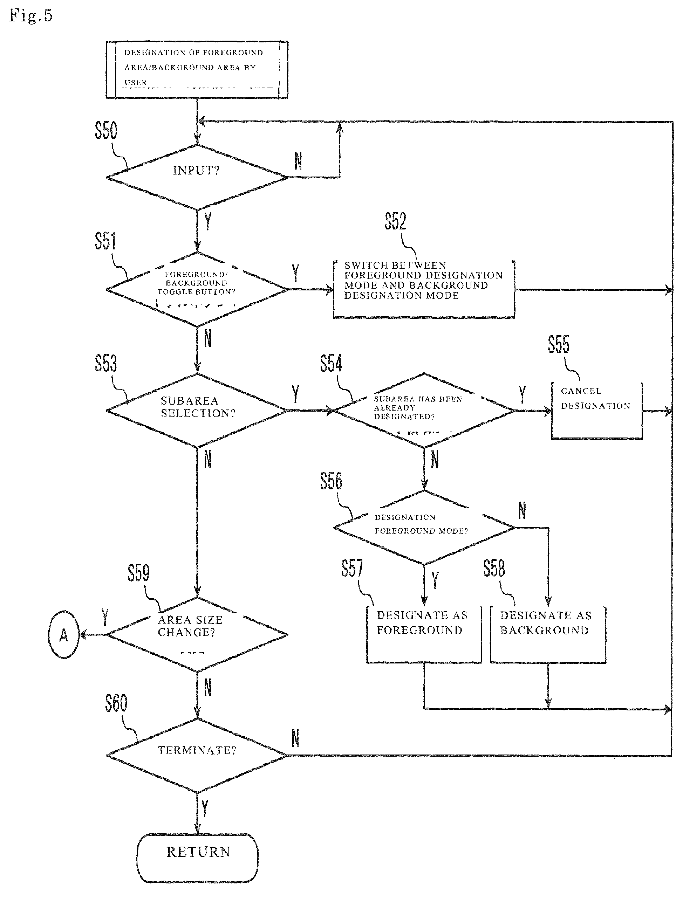

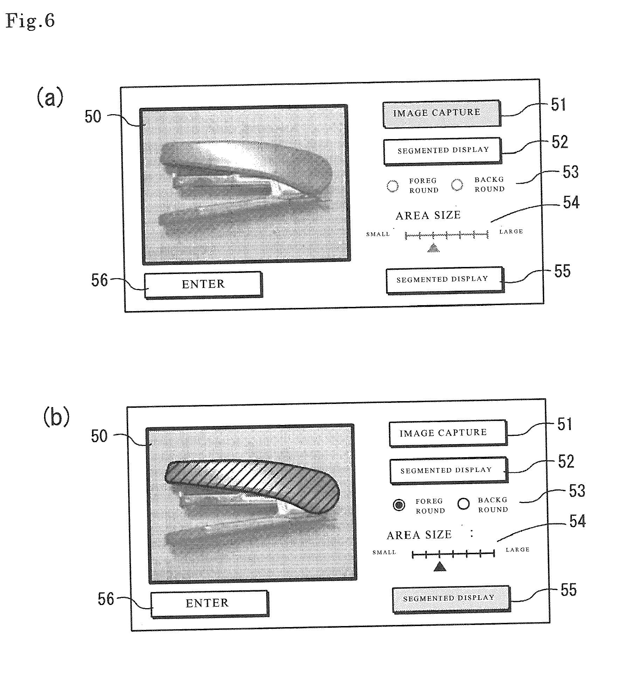

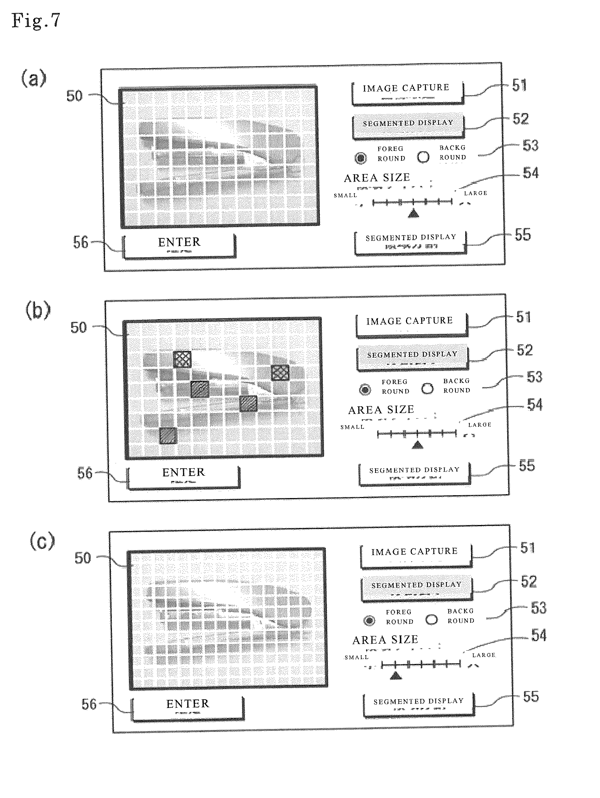

The functions and the operations of the setting tool 103 are described by following the flowcharts in Figs. 4 and 5. Fig. 4 is the flowchart showing a flow of the processing of setting the inspection area by using the setting tool 103. Fig. 5 is the flowchart showing processing in Step S43 in Fig. 4 in detail. Furthermore, examples of an inspection area setting screen in Figs. 6 and 7 will be referred to, as appropriate.

When the setting tool 103 is started, a setting screen in Fig. 6(a) is displayed on the display device 12. The setting screen includes an image window 50, an image capture button 51, a segmented display button 52, a foreground/background toggle button 53, an area size adjustment slider 54, an area segmentation button 55, and an enter button 56. Through a predetermined operation (for example, clicking a mouse or pressing a predetermined key) using the input device 14, button selection, slider movement, subarea selection, or the like is performed. This setting screen is merely an example. Any UI may be used as long as the input operation and image check described below can be performed.

When the user presses the image capture button 51, the setting tool 103 captures an image of a sample of the inspection target object with the image sensor 11 (Step S40). As the sample, the inspection target object with a good quality is used, and the image is captured preferably under the same condition (relative positions between the image sensor 11 and the sample, lighting, and the like) as the actual inspection processing. The sample image data thus acquired is captured in the apparatus main body 10. When a sample image captured in advance is in the auxiliary storage device and the storage device 13 of the apparatus main body 10, the setting tool 103 may read the data of the sample image from the auxiliary storage device and the storage device 13.

The sample image captured in Step S40 is displayed on the image window 50 in the setting screen as shown in Fig. 6(a) (Step S41). As shown in Fig. 6(a), when the target object has a complicated shape, and the difference between the foreground (portion to be extracted as the inspection area) and the background (other portions) in the color or the brightness is not so large, the computer has difficulty in automatically recognizing and determining where to set the inspection area. Thus, in this embodiment, the user designates the areas to be the foreground and the background in the sample image, to a computer, as initial values. Here, the configuration is employed, in which candidates of the areas that can be designated are presented to the user (recommendation), and the user is allowed to select the desired area therefrom. Thus, the area can be designated easily and as desired.

When the user presses the segmented display button 52, the setting tool 103 generates a grid pattern overlaid image (hereinafter, simply referred to as a designating image) for area designation, and displays the designating image on the image window 50 (Step S42). Fig. 7(a) shows a display example of the designating image. A grid (lattice) pattern at an equal interval is drawn on the original sample image. Thus, a state where a plurality of rectangular subareas are set on the sample image by the grid pattern is achieved. When the segmented display button 52 is in the selected state, and the designating image is displayed (the state will be referred to as segmented display mode), the foreground/background toggle button 53 and the area size adjustment slider 54 are enabled. In the segmented display mode, the user can designate the areas to be the foreground and the background on the designating image by using the input device 14 (Step S43).

Fig. 5 shows input event processing in the segmented display mode. The setting tool 103 is in a standby state until an input event from the user occurs (Step S50). If the input event of any kind occurs, the processing proceeds to Step S51.

When the input event is changing the foreground/background toggle button 53 (Step S51; Y), the setting tool 103 switches between a foreground designating mode and a background designating mode in accordance with the state of the toggle button 53 (Step S52).

When the input event is the selection of the subarea (Step S53; Y), the processing proceeds to Step S54. The subarea may be selected through, for example, an operation of moving a mouse cursor to any of the subareas in the designating image, and clicking the button of the mouse. When the display device 12 is a touch panel display, the subarea can be selected by an intuitive operation of touching the subarea of the designating image. When a subarea is selected, the setting tool 103 checks whether the subarea is the subarea that has already been designated (Step S54). If the subarea has already been designated, the designation is cancelled (Step S55). When the subarea has not been designated, the subarea is designated as the foreground when the current mode is the foreground designating mode (Step S56; Y, Step S57), and the subarea is designated as the background when the current mode is the background designating mode (Step S56; N, Step S58). The subarea designated as the foreground or the background may have the boundary and/or the color therein changed (highlighted), or have a predetermined mark drawn therein, so as to be distinguished from other undesignated subareas. The color, the way of highlighting, or a mark to be drawn may be changed so that the foreground area and the background area can be distinguished from each other. Fig. 7(b) shows an example where two foreground areas (subareas illustrated by cross hatching) and three background areas (subareas illustrated in left-inclined hatching) are designated.

When the input event is the operation on the area size adjustment slider 54 (Step S59; Y), the processing returns to Step S42 in Fig. 4. The area size adjustment slider 54 is a UI for increasing or reducing the interval between the grids overlaid on the designating image, that is, the size of the subarea. In Step S42, the designating image is updated in accordance with the area size changed with the slider 54. Fig. 7(c) shows an example where the areas size is reduced. In Fig. 7(a), 108 subareas in 9 rows and 12 columns are formed, whereas in Fig. 7(c), 192 subareas in 12 rows and 16 columns are formed. For example, when the subarea is too large relative to the target object in the sample image, and thus the subarea is disposed over both the foreground and the background, the area size is reduced, thereby enabling detailed area designation.

When the input event is the pressing of the area segmentation button 55, the segmented display mode is terminated (Step S60; Y). The segmented display mode may be terminated also when the segmented display button 52 is pressed again or when the image capture button 51 is pressed. When the segmented display mode is to be continued, the processing returns to Step S50.

Referring back to Fig. 4, Step S44 is described. In Step S44, the setting tool 103 uses the foreground/background designated in Step S43 as the initial value, and applies area segmentation (segmentation) processing to the sample image. The foreground portion obtained as a result of the area segmentation processing is extracted as the inspection area. A number of algorithms for the area segmentation processing have been proposed, and the setting tool 103 can use any of the algorithms. Thus, the detailed description of the area segmentation processing is omitted herein. The inspection area extracted in Step S44 is displayed on the image window 50 in the setting screen. The user can check whether the desired area is selected as the inspection area, by looking at the inspection area displayed on the setting screen. Here, the inspection area (hatched portion) is preferably overlaid on the sample image as shown in Fig. 6(b), so that the comparison between the inspection target object and the inspection area is facilitated.

Then, when the user presses the enter button 56, the setting tool 103 generates the inspection area definition information for the extracted inspection area, and stores the inspection area definition information in the storage device 13 (Step S45). When an inappropriate inspection area is extracted in Step S44, the processing may return to the image capturing (Step S40), the foreground/background designation (Step S43), or the like to be redone.

### (Advantage of This Embodiment)

With the configuration described above, a plurality of subareas as candidates are recommended by a computer, and a user only needs to select an area satisfying a desired condition, from the candidates. Thus, the area can be intuitively and easily designated. The boundaries of the subareas are clearly shown, and the area is designated in a unit of a subarea, and thus the designation of the user is more restricted, compared with a conventional method of allowing the user to freely input any area or pixel group with a mouse or the like. The restriction can prevent erroneous designation of selecting an unintended pixel as well, and thus facilitate the intended area designation.

When the target image is segmented into a lattice form at an equal interval as in this embodiment, the subareas of the same shape are regularly arranged, and thus the subarea can be easily selected. The size of the subarea can be changed by the user with the area size adjustment slider 54. Thus, the size of the subarea can be appropriately adjusted in accordance with the size and the shape of the foreground portion (or the background portion) in the target image, whereby the area designation is facilitated. In this embodiment, the segmentation into the subareas is performed with a lattice pattern. However, this should not be construed in limiting sense, and a mesh pattern including elements of a polygonal shape such as a triangle or a hexagon, or any other shapes may be used. The subarea may have uniform or non-uniform shapes and sizes, and may be arranged regularly or randomly.

### <Second Embodiment>

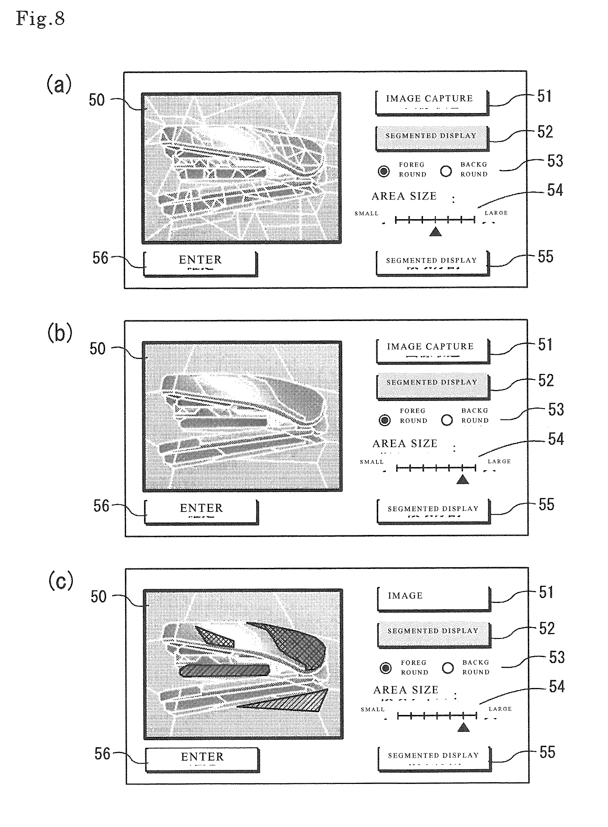

A second embodiment of the present invention is described by referring to Fig. 8. The second embodiment is different from the first embodiment, in which the designating image is generated by the pattern segmentation, in that a plurality of subareas are formed by grouping pixels based on feature quantities in an image so as to generate the designating image. Specifically, the content of the processing in Step S42 in the flow of Fig. 4 is only replaced. Aside from this, the configuration and the processing are the same as those in the first embodiment.

A segmentation method of this embodiment segments an image into more detailed areas than in area segmentation (dividing between the foreground and the background) performed in the later step, and thus will be hereinafter referred to as "over segmentation". A method called super pixel, or a method such as clustering and labeling may be used as an algorithm for the over segmentation. The purpose of the segmentation into subareas is to facilitate the designation of the foreground/background provided as the initial value in the area segmentation processing in the later step. Thus, when the over segmentation is performed, whether to integrate the pixels at least based on a feature of the color, the brightness, or the edge, may be determined. In this embodiment described below, adjacent pixels with a similar feature of the color or the brightness are grouped into a subarea.

Fig. 8(a) shows an example of a designating image formed by the over segmentation. In a case of the over segmentation, unlike with the pattern segmentation in the first embodiment, the sizes and the shapes of the subareas are non-uniform, and the subareas having shapes corresponding to the shape, the pattern, the shading, and the like of an object in the target image, are formed. When the subareas formed by the over segmentation are too small, and thus are difficult to select, recalculation for the over segmentation may be performed with a condition changed by the area size adjustment slider 54 as shown in Fig. 8(b). The area designation with a mouse cursor and a touch panel is easier when the subareas have larger sizes as shown in Fig. 8(b). Fig. 8(c) shows an example where two foreground areas (subareas illustrated by cross hatching) and two background areas (subareas illustrated by left-inclined hatching) are designated in the designating image in Fig. 8(b).

The configuration of the second embodiment described above provides the following advantageous effects in addition to the same advantageous effects provided by the first embodiment. Specifically, the subareas formed by the over segmentation have shapes reflecting the shape/the pattern/the shading and the like of the object. Thus, even an area with a narrow and small size and a complex shape can be easily selected. The subarea formed by the over segmentation includes a pixel group with a similar feature of the color or the brightness feature, or a pixel group defined by an edge. Thus, the subarea is less likely to include the pixels of both the foreground and the background. Thus, the advantage that the erroneous designation of selecting an unintended pixel is less likely to occur, is further provided.

### <Third Embodiment>

Next, a third embodiment of the present invention will be described. The third embodiment is different from the first and the second embodiments, in which all the subareas are displayed on the designating image, in that only a part of the subareas is displayed. Specifically, the content of the processing in Step S42 in the flow of Fig. 4 is only replaced. Aside from this, the configuration and the processing are the same as those in the first embodiment.

Various rules for extracting subareas to be displayed on the designating image are conceivable.

For example, when the subareas are formed by the pattern segmentation as in the first embodiment, ones with a uniform color or brightness and ones without an edge (a portion with a high contrast) may be extracted with a higher priority. With the pattern segmentation, subareas are formed without taking the features in an image into account, and thus some subareas might be at position over both the foreground and the background. Such a subarea should not be designated as the foreground or the background, and should be excluded from the options in advance, so that higher user friendliness is achieved, and the erroneous designation of such a subarea is prevented in advance.

An extremely narrow and small area might be formed by the over segmentation in the second embodiment. The narrow and small area is not only difficult to select, but also degrades the visibility of the designated image, and thus is not preferable. Thus, in the case of the over segmentation, a method of extracting subareas with a larger size (area) or width, with a higher priority is preferable. When the foreground and the background are almost the same in the color or the brightness, a subarea over both the foreground and the background might be formed by the over segmentation. Thus, a method of evaluating the contrast in the subarea and the contrast in a boundary portion (contour) of the subarea, and extracting a subarea without an edge, a subarea with a high contrast in the boundary, and the like with a high priority, is also preferable. Thus, the subarea including pixels in both the foreground and the background can be excluded.

As a method that can be applied to both the pattern segmentation and the over segmentation, it is also preferable that the subareas to be extracted be selected, in such a manner that the feature of the color or the brightness, or the position varies (variety) among the extracted subareas as much as possible. By thus determining candidates of the subarea, subareas can be sufficiently set to various positions and to the foreground portion and the background portion, in an image.

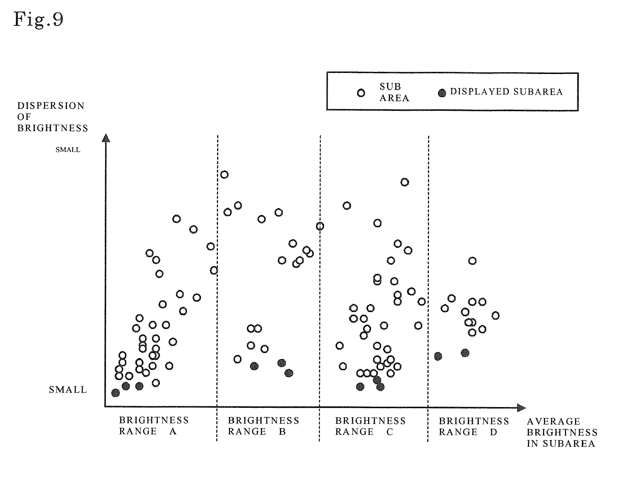

Fig. 9 shows an example of a method for extracting a subarea. Fig. 9 shows a graph with the horizontal axis representing the average brightness and a vertical axis representing brightness dispersion in a subarea. All the subareas formed by the pattern segmentation are plotted in the graph. Specifically, the horizontal axis represents the variation of the brightness feature among the subareas, and the vertical axis represents the uniformity of the brightness in the subarea. From various positions in the horizontal axis, subareas plotted more on the lower side in the vertical axis maybe extracted with a higher priority. In this embodiment, the horizontal axis is divided into four brightness ranges A to D based on the distribution of the subareas in the horizontal axis direction, and the subareas with the smallest dispersion is extracted from each of the brightness ranges A to D. The number of subareas to be extracted from each brightness range may be determined in accordance with the number of subareas in each brightness range, or may be determined in accordance with the value of dispersion.

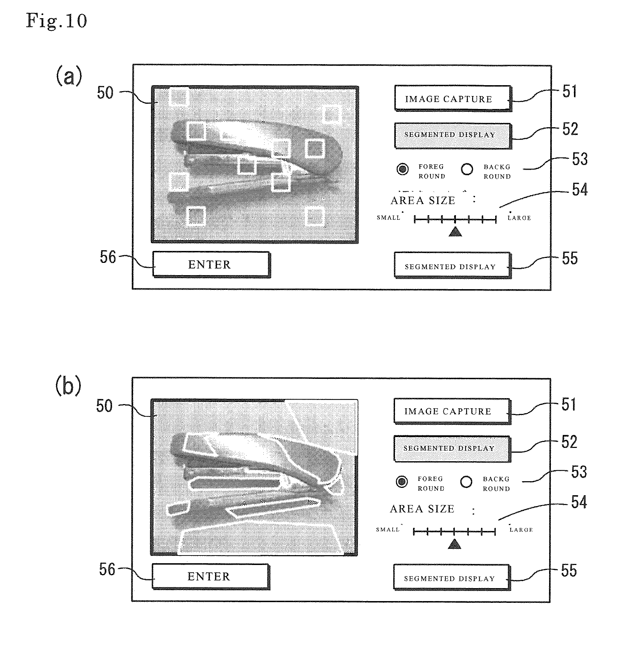

Fig. 10(a) is an example where only the subareas (black points) extracted in Fig. 9, are drawn on the designating image. The subareas are appropriately distributed to the foreground portion and the background portion. Furthermore, the number of the subareas is small and the subareas are spaced apart from each other. Thus, it can be seen that the area designation is easier than in the case of Fig. 7(a). Fig. 10(b) shows an example where subareas are extracted with the over segmentation. The area designation is facilitated in this case as well.

### <Fourth Embodiment>

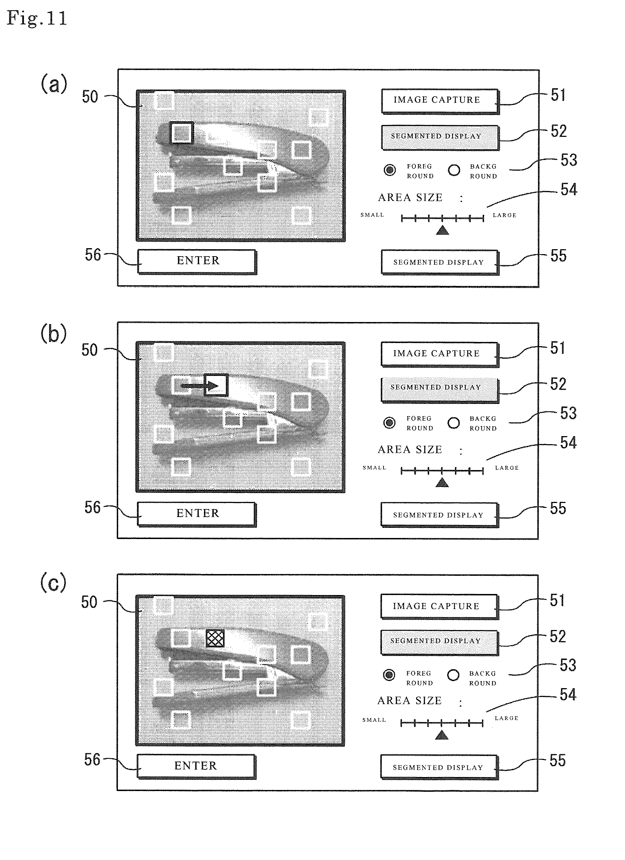

Fig. 11 shows a fourth embodiment of the present invention. The fourth embodiment is different from the embodiments described above, in which a subarea is selected with a mouse or a touch panel, in that a subarea is selected with an input device such as a keyboard or a keypad. Aside from this, the configuration is similar to one in the other embodiments.

The input device of this embodiment is provided with a movement key and a selection key. In the setting screen of this embodiment, as shown in Fig. 11(a), any one of subareas in the designating image is in a selected state (focused). In the example of Fig. 11(a), the subarea at a position in the third column from the left and the third row from the upper side is in the selected state, and a focus frame is drawn thereat. The focus frame moves by one every time the user presses the movement key. Fig. 11 (b) shows a state where the focus frame moves towards the right. The focus frame may be movable in any direction with arrow keys pointing up, down, left, and right, or may sequentially move in a single direction with a single movement key such as a space key. When the user presses the selection key, the subarea currently in the selected state (the subarea where the focus frame is positioned) is designated as the foreground or the background (see Fig. 11(c)). In this case, whether the subarea is set as the foreground or the background may be determined in accordance with the mode set by the foreground/background toggle button 53. Alternatively, for example, when a foreground selection key and a background selection key are separately provided, whether the subarea is set as the foreground or the background may be determined in accordance with the type of the pressed selection key, regardless of the mode.

With an interface as in this embodiment, the intended subarea can be selected without fail with simple operation on the movement key and the selection key. In this embodiment, the subarea in the selected state is highlighted with the focus frame. Thus, the subarea in the selected state can be easily distinguished from the other subareas. Accordingly, the erroneous selection of the subarea can be prevented, and the usability can be improved. A method of highlighting is not limited to that with the focus frame, and any other methods such as changing the color of the frame of the subarea or the color in the area may be employed.

### <Fifth Embodiment>

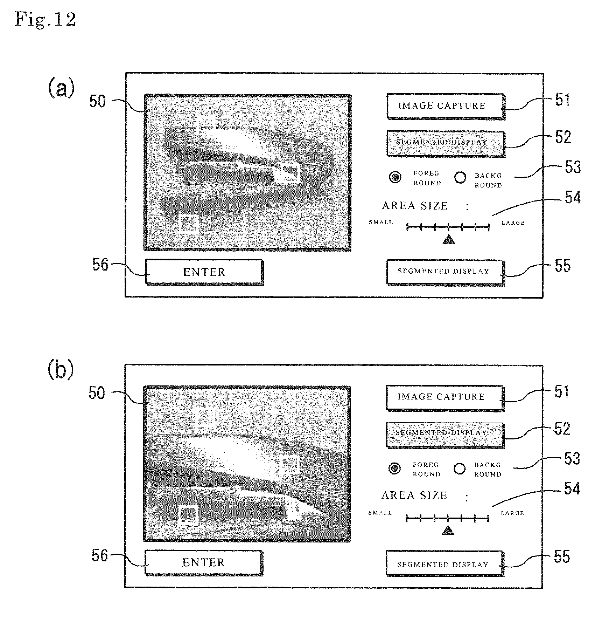

Fig. 12 shows a fifth embodiment of the present invention. In this embodiment, a target image, displayed on the image window 50, can be enlarged, downsized, translated (scrolled), or rotated by the user. The operation instructions may be capable of being performed by dragging or wheeling a mouse for example, or dragging or pinching on a touch panel.

Figs. 12(b) shows a state where an image in Fig. 12(a) is enlarged and translated. Here, the designating image in the image window 50 is updated, but only the target image has the display magnification and displayed position changed, and thus the position and the size of the subarea overlaid on the designating image remain unchanged. This function can be used to position a subarea at a desired area in the target image. For example, in the example of Fig. 12(a), upper two of three subareas are each disposed at a position over both the foreground and the background. In such a case, by adjusting the magnification and the position of the target image as in Fig. 12(b), the subarea can be disposed in such a manner as not to be disposed over both the foreground and the background. Thus, there is an advantage that only the foreground or the background can be accurately designated easily with the function.

### <Sixth Embodiment>

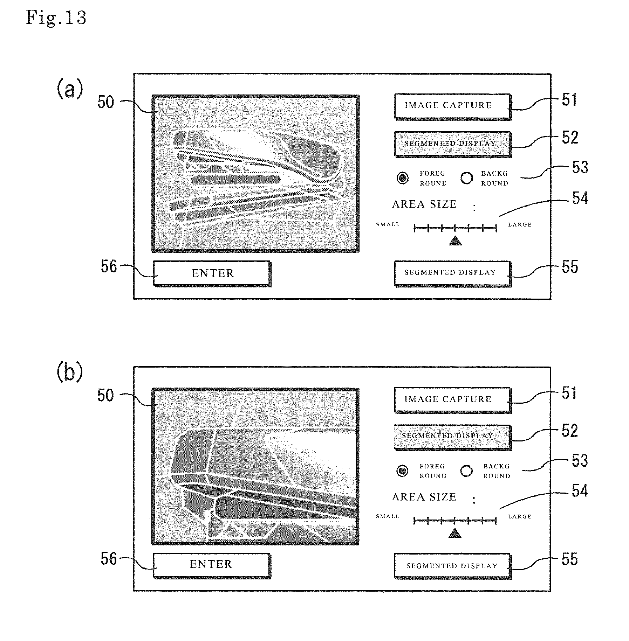

Fig. 13 shows a sixth embodiment of the present invention. The sixth embodiment is different from the fifth embodiment described above, in which only the image is enlarged/reduced, translated, and rotated, and the position and the size of the subarea remain unchanged, in that the enlarging and the like are performed on both the image and the subarea. An operation instruction such as enlarging is the same as the fifth embodiment.

Fig. 13(b) shows a state where an image in Fig. 13(a) is enlarged and translated. This function can be used to check the matching between the target image and the subarea, in detail. For example, in an image of a standard magnification shown in Fig. 13(a), how the subarea is formed, in a narrow and small area and a portion with a complex shape in the image, might be difficult to recognize. On the other hand, in the enlarged image in Fig. 13(b), the pixels in the image, on which the subarea and the contour thereof are overlaid, can be checked in detail. Thus, the accurate area selection is facilitated with the function.

The embodiments described above each represent a specific example of the present invention, and there is no intension to limit the scope of the present invention to the specific examples. For example, in the embodiments described above, the example where the present invention is applied to the inspection area setting in the image inspection apparatus is described. However, the present invention can be applied to any apparatus that uses the area segmentation (segmentation).

### Reference Signs List

1: image inspection apparatus
2: inspection target object (casing member)
10: apparatus main body, 11: image sensor, 12: display device, 13: storage device, 14: input device
30: inspection area, 31: inspection area image
50: image window, 51: image capture button, 52: segmented display button, 53: foreground/background toggle button, 54: area size adjustment slider, 55: area segmentation button, 56: enter button
101: inspection processing unit, 102: inspection area extraction unit, 103: setting tool

## Claims

1. An area designating method of allowing, when area segmentation processing of dividing a target image into a foreground and a background is performed, a user to designate an area, as a part of the target image, as an area to be the foreground or the background, the method comprising:
a subarea setting step, in which a computer sets at least one subarea larger than a pixel, in the target image;
a display step, in which the computer displays a designating image, on which a boundary of the subarea is drawn on the target image, on a display device; and
a designating step, in which the computer allows the user to select the area to be the foreground or the background, from the at least one subarea on the designating image, by using an input device.

2. The area designating method according to claim 1, wherein the subarea setting step comprises a segmentation step of segmenting the target image into a predetermined pattern to form a plurality of the subareas.

3. The area designating method according to claim 2,
wherein the subarea setting step further comprises an extraction step of extracting a part of the subareas from the plurality of subareas formed in the segmentation step, and
wherein in the display step, only the subarea extracted in the extraction step is drawn in the designating image.

4. The area designating method according to claim 3, wherein in the extraction step, the subarea with a uniform color or brightness or the subarea without an edge is extracted with a higher priority.

5. The area designating method according to claim 3, wherein in the extraction step, the subareas to be extracted are selected in such a manner that a feature of a color or brightness, or a position in the target image varies among the extracted subareas as much as possible.

6. The area designating method according to claim 1, wherein the subarea setting step comprises a segmentation step of forming a plurality of the subareas by grouping the pixels based on a feature of at least one of a color, brightness, and an edge.

7. The area designating method according to claim 6,
wherein the subarea setting step further comprises an extraction step of extracting a part of the subareas from the plurality of subareas formed in the segmentation step, and
wherein in the display step, only the subarea extracted in the extraction step is drawn in the designating image.

8. The area designating method according to claim 7, wherein in the extraction step, the subarea without the edge, the subarea with a large size or width, or the subarea with a high contrast at a boundary portion is extracted with a higher priority.

9. The area designating method according to claim 7, wherein in the extraction step, the subareas to be extracted are selected in such a manner that a feature of a color or brightness, or a position in the target image varies among the extracted subareas as much as possible.

10. The area designating method according to any one of claims 1 to 9, wherein the subarea selected by the user as the area to be the foreground or the background in the designating step is highlighted.

11. The area designating method according to any one of claims 1 to 10, wherein a size of the subarea with respect to the target image is changeable by the user.

12. The area designating method according to any one of claims 1 to 11 further comprising an image update step, in which the computer updates the designating image displayed on a screen of the display device, in accordance with an instruction from the user to enlarge, downsize, translate or rotate the image,
wherein in the image update step, the subarea is enlarged, downsized, translated, or rotated together with the target image.

13. The area designating method according to any one of claims 1 to 5 further comprising an image update step, in which the computer updates the designating image displayed on a screen of the display device, in accordance with an instruction from the user to enlarge, downsize, translate or rotate the image,
wherein in the image update step, only the target image is enlarged, downsized, translated, or rotated, without changing a position and a size of the subarea on the screen.

14. The area designating method according to any one of claims 1 to 11,
wherein the input device comprises a movement key and a selection key, and
wherein the designating step comprises:
a step of putting any one of the subareas on the designating image in a selected state;
a step of sequentially changing the subarea to be in the selected state, every time an input by the movement key is received from the user; and
a step of selecting the subarea currently in the selected state as the foreground or the background, when an input by the selection key is received from the user.

15. The area designating method according to claim 14, wherein the subarea currently in the selected state is highlighted.

16. The area designating method according to any one of claims 1 to 13,
wherein the input device is a touch panel disposed on the screen of the display device, and
wherein in the designating step, the user touches the subarea on the designating image displayed on the screen of the display device, so that the area to be the foreground or the background is selected.

17. A program causing the computer to execute the steps in the area designating method according to any one of claims 1 to 16.

18. An area designating device configured to allow, when area segmentation processing of dividing a target image into a foreground and a background is performed, a user to designate an area, as a part of the target image, as an area to be the foreground or the background, the device comprising:
a subarea setting means configured to set at least one subarea larger than a pixel, in the target image;
a display means configured to display a designating image, on which a boundary of the subarea is drawn on the target image, on a display device; and
a designating means configured to allow the user to select the area to be the foreground or the background, from the at least one subarea on the designating image, by using an input device.
